(19) Europäisches Patentamt / European Patent Office / Office européen des brevets

(11) **EP 1 909 938 B1**

(12) **FASCICULE DE BREVET EUROPEEN**

| | |
|---|---|
| (45) Date de publication et mention de la délivrance du brevet: **05.01.2011 Bulletin 2011/01** | (51) Int Cl.: ***B01D 15/38*** *(2006.01)* ***B01J 20/28*** *(2006.01)* ***B01J 20/22*** *(2006.01)* |
| (21) Numéro de dépôt: **06794219.3** | (86) Numéro de dépôt international: **PCT/FR2006/001820** |
| (22) Date de dépôt: **26.07.2006** | (87) Numéro de publication internationale: **WO 2007/012754 (01.02.2007 Gazette 2007/05)** |

(54) **METHODE DE CHROMATOGRAPHIE D'AFFINITE D'ANTITHROMBINE III**

AFFINITÄTSCHROMATOGRAFIEVERFAHREN FÜR ANTITHROMBIN III

METHOD FOR AFFINITY CHROMATOGRAPHY OF ANTITHROMBIN III

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK RS**

(30) Priorité: **27.07.2005 FR 0507986**

(43) Date de publication de la demande:
**16.04.2008 Bulletin 2008/16**

(73) Titulaire: **Aventis Pharma S.A.**
**92160 Antony (FR)**

(72) Inventeurs:
• **MOURIER, Pierre**
**F-94220 Charenton le Pont (FR)**
• **PERRET, Gérald**
**F-94600 Choisy-le-Roi (FR)**

(74) Mandataire: **Le Coupanec, Pascale A.M.P.**
**Cabinet Lavoix**
**2, place d'Estienne d'Orves**
**75441 Paris Cedex 09 (FR)**

(56) Documents cités:
**EP-A- 1 026 172     US-A- 4 415 631**

• **HÖÖK ET AL.: "ANTICOAGULANT ACTIVITY OF HEPARIN: SEPARATION OF HIGH-ACTIVITY AND LOW-ACTIVITY HEPARIN SPECIES BY AFFINITY CHROMATOGRAPHY ON IMMOBILIZED ANTITHROMBIN" FEBS LETTERS, vol. 66, no. 1, 1976, pages 90-93, XP002370571 Amsterdam ISSN: 0014-5793 cité dans la demande**
• **DATABASE WPI Section Ch, Week 199322 Derwent Publications Ltd., London, GB; Class B04, AN 1993-180102 XP002375735 & SU 1 708 400 A1 (UNIV TADZ) 30 janvier 1992 (1992-01-30)**
• **PATENT ABSTRACTS OF JAPAN vol. 2003, no. 12, 5 décembre 2003 (2003-12-05) & JP 2005 013156 A (FUJIMORI KOGYO CO LTD; CHISSO CORP), 20 janvier 2005 (2005-01-20)**

Remarques:
Le dossier contient des informations techniques présentées postérieurement au dépôt de la demande et ne figurant pas dans le présent fascicule.

EP 1 909 938 B1

**Description**

La présente invention a pour objet une colonne de chromatographie d'affinité comprenant la protéine ATIII liée à un support solide.

Les héparines, mélanges de mucopolysaccharides sulfatés d'origine animale, sont des agents biologiquement actifs de la famille des glycosaminoglycanes qui ont des propriétés anticoagulantes particulièrement utiles. Elles sont constituées de chaînes linéaires polysaccharidiques sulfatées très hétérogènes de par leurs tailles. Le poids moyen des héparines est d'environ 15000 Da (origine : mucus de porc).

Les héparines de bas poids moléculaire (HBPM) et les héparines de très bas poids moléculaire (HTBPM) sont préparées par coupure des chaînes polysaccharidiques longues d'héparine en chaînes plus courtes de bas poids moléculaire. Par HBPM et HTBPM on entend ainsi des chaînes dont le poids moléculaire est compris respectivement entre 3000 et 6500 Da et entre 1500 et 3000 Da.

L'Antithrombine III (ATIII) (Chandra et al., 1983, Proc. Natl. Acad. Sci. U.S.A., 80 : 1845-1848) est une serpine spécifique, qui a une faible activité inhibitrice des sérine protéases contrôlant la coagulation. Cette action est nettement augmentée en présence d'héparine qui lie et active ATIII. En particulier, la liaison à l'héparine entraîne un ensemble de changements conformationnels dans la protéine culminant avec l'adoption d'une conformation hautement favorable à l'interaction avec les sérines protéases cibles. Quand ATIII est dans la conformation activée, l'interaction avec la molécule d'héparine ou dérivée qui a initié le changement de conformation est nettement renforcée.

L'interaction entre l'héparine et ATIII est due à une séquence pentasaccharidique spécifique. Or, seul un tiers des brins polysaccharidiques possède les séquences spécifiques permettant une interaction stable avec l'ATIII. Les préparations d'héparine et dérivés sont donc hétérogènes en ce qui concerne l'affinité pour ATIII. Il est important de pouvoir enrichir une population d'oligosaccharides en espèces affines pour ATIII, un tel enrichissement étant susceptible d'augmenter significativement l'activité anticoagulation de cette population.

Une méthode de chromatographie d'affinité ATIII pour séparer les fractions affines et non affines de l'héparine est décrite dans Höök et al. (1976, FEBS Lett., 66 : 90-93). D'autres méthodes ont été publiées mais reprennent les points essentiels de la méthode de Höök *et al.* (Hopwood et al., 1976, FEBS Lett., 69: 51-54; Denton et al., 1981, Anal. Biol., 118: 388-391; Pixley & Danishefsky, 1982, Thromb. Res., 26 : 129-133). Selon cette méthode, ATIII est greffée, en présence d'héparine acétylée, sur la résine Sepharose B activée au CNBr. L'utilisation d'héparine a pour but de prévenir tout greffage au niveau du site de liaison à l'héparine d'ATIII.

Cette technique a deux limitations importantes.

Tout d'abord, l'héparine utilisée pour lier ATIII est une héparine acétylée, de façon à éviter le risque de compétition avec les résidus $NH_2$ des hexamines. Or l'acétylation de l'héparine se traduit par une baisse importante de son affinité et donc de son pouvoir protecteur vis à vis du site de liaison, d'où une diminution du nombre de molécules ATIII capables de lier les espèces affines.

D'autre part, au vu de la concentration d'ATIII utilisée (environ 7 mg de protéine/ ml de résine hydratée), il y a un risque fort de gêne stérique entre les molécules de polysaccharides susceptibles de se lier à ATIII lors d'une purification d'espèces affines pour ATIII.

La présente invention a pour objet une colonne de chromatographie d'affinité comprenant la protéine antithrombine III (ATIII) liée à un support solide **caractérisée en ce que** :

a. la protéine ATIII est la protéine sauvage ou un variant de celle-ci,
b. la protéine ATIII a été préalablement activée par incubation avec une héparine de bas poids moléculaire (HBPM) non modifiée et riche en espèces actives,
c. la protéine ATIII est liée de façon covalente à une résine dans un rapport inférieur à environ 2 mg de protéine par ml de résine hydratée.

Par HBPM non modifiée, on entend une HBPM qui n'a pas subi de modification chimique ou enzymatique après préparation et, en particulier, qui n'est pas acétylée. On entend, par HBPM riche en espèces actives, une HBPM riche en oligosaccharides affins pour l'ATIII.

Par résine, on entend selon l'invention un support macromoléculaire chimiquement inerte sur lequel est greffée ATIII. Ces supports comprennent entre autres, et de façon non limitative, les billes d'agarose, de polyacrylamide d'agarose, de verre poreux, de polyvinyle ou de polyméthacrylate, sur lesquelles ATIII est greffée en suivant les indications des fabricants ou les méthodes bien connues de l'homme du métier, dont en particulier les méthodes de greffage au bromure de cyanogène et à l'hydrazine. Il est bien entendu que des résines pré-activées peuvent aussi être utilisées.

Selon un mode tout particulièrement avantageux de réalisation de l'invention, la résine utilisée est de la Sepharose et la technique de greffage utilisée est celle du greffage au bromure de cyanogène.

La colonne de chromatographie d'affinité selon l'invention présente un double avantage.

D'une part, l'utilisation d'une HBPM non modifiée pour protéger le site de liaison d'ATIII permet de fixer la protéine sous une conformation activée. Sous cette conformation, ATIII exhibe une affinité significativement plus forte et plus sélective vis à vis des espèces affines que les ATIII liées via les amines primaires sans activation préalable.

D'autre part, la faible concentration en ATIII permet des interactions avec les espèces affines sans gêne stérique entre elles. Cette propriété de l'invention est particulièrement intéressante quand on cherche à séparer des espèces de grande taille.

Pour que toutes les molécules ATIII soient activées, il est préférable d'utiliser une quantité saturante d'HBPM non modifiée et riche en espèces affines.

Selon un mode de mise en oeuvre avantageux de l'invention, le rapport entre les quantités de sites liant ATIII présents dans HBPM et de molécules d'ATIII est compris entre environ 5 et environ 15. Plus précisément, l'invention a pour objet une colonne de chromatographie d'affinité telle que définie plus haut **caractérisée en ce que** ce rapport est d'environ 10.

L'invention a tout particulièrement pour objet une colonne de chromatographie d'affinité **caractérisée en ce qu'**on utilise l'enoxaparine® comme HBPM pour protéger le site de liaison d'ATIII.

Comme expliqué plus haut, l'invention présente aussi l'avantage de permettre une meilleure accessibilité à ATIII en jouant sur la concentration de protéine greffable sur la résine.

Selon un autre mode avantageux de réalisation, l'invention a pour objet une colonne de chromatographie d'affinité **caractérisée en ce que** le rapport ATIII/résine est compris entre environ 0,5 et environ 1,5 mg de protéine par ml de résine. Par exemple, pour une résine de type Sepharose B activée au bromure de cyanogène (Sigma), cela correspond à une gamme d'environ 1,75 mg à 5,25 mg de protéine par g de résine sèche (selon les données du fournisseur, 1 g de résine sèche donne environ 3,5 ml de résine après hydratation).

Ainsi, la colonne de chromatographie d'affinité suivant l'invention présente une plus grande capacité et une plus grande sélectivité que les colonnes décrites dans l'état de la technique.

Il existe des situations où l'on peut désirer purifier des espèces affines d'ATIII à partir d'un mélange d'espèces affines et non affines. Par espèce affine d'ATIII, on entend toute molécule susceptible de se lier spécifiquement à ATIII. Par exemple, on peut vouloir enrichir une population d'oligosaccharides hépariniques en espèces affines. Il peut aussi être intéressant par exemple d'augmenter le titre d'une solution d'anticorps polyclonaux contre ATIII.

La colonne de chromatographie d'affinité suivant l'invention peut ainsi être utilisée pour purifier des espèces affines d'ATIII à partir d'un mélange. L'invention a donc aussi pour objet un procédé de purification des espèces affines de l'ATIII dans un échantillon comprenant des espèces affines et non affines de l'ATIII, ledit procédé comprenant :

a. l'introduction dudit échantillon dans la colonne de chromatographie d'affinité pour la protéine ATIII, ladite colonne étant préalablement équilibrée dans un tampon salin approprié ;
b. le lavage des espèces non spécifiquement retenues de ladite colonne par un tampon salin de lavage approprié et
c. l'élution des espèces spécifiquement retenues de ladite colonne par un tampon salin d'élution approprié.

En particulier, selon un mode de réalisation tout particulièrement avantageux, les espèces affines purifiées par le procédé selon l'invention sont des oligosaccharides constituant les héparines et leurs dérivés.

L'élution des différentes espèces pourra, par exemple, être suivie en mesurant l'absorbance des différentes fractions à l'aide d'un spectrophotomètre. La longueur d'onde utilisée sera appropriée à la nature des espèces purifiées. Par exemple, si on purifie des oligosaccharides la longueur utilisée sera 232 nm ; si on purifie des protéines, elle sera de 280 nm.

La composition des fractions d'élution peut être ensuite analysée suivant des méthodes bien connues de l'homme du métier. Ainsi, si les fractions analysées comprennent des oligosaccharides, l'homme du métier pourra utiliser les méthodes d'analyse décrites dans l'art antérieur : par exemple et de façon non limitative, l'électrophorèse capillaire, la spectrophotométrie de masse MALDI-TOF, la chromatographie liquide haute performance. L'homme du métier pourra aussi utiliser un test biologique, comme le test d'inhibition du facteur Xa.

## Exemples

Les exemples suivants illustrent l'invention sans toutefois la limiter.

Légende des figures

Figure 1 : chromatogramme d'une séparation d'enoxaparine® sur chromatographie d'affinité ATIII.
Figure 2 : chromatogramme d'une séparation d'enoxaparine® sur chromatographie d'affinité ATIII. La courbe 1 représente l'injection de HBPM sur colonne 1 (protection enoxaparine ®), la courbe 2 l'injection de tampon sur colonne 1 (protection enoxaparine ®), la courbe 3 l'injection de HBPM sur colonne 2 (protection héparine), la courbe 4 l'injection de tampon sur colonne 2 (protection héparine).

Exemple 1 : Préparation et utilisation de la colonne

1. Préparation de la colonne

On reconstitue 10 mg d'ATIII dans 2 ml d'eau ppi, qu'on reprend ensuite dans 18ml de tampon de couplage (NaHCO3 0,2M, NaCl 0,5M, pH=8) à une concentration finale de 0,5 mg/ml (8,6 $\mu$M). On ajoute à la solution 34,4 mg d'enoxaparine® à une concentration finale de 1,4 mg/ml (215 $\mu$M).

La solution est mélangée dans un rapport 1 : 2 avec de la résine Sepharose B activée au CNBr (Sigma) préparée suivant les indications du fabricant, puis est agitée doucement toute la nuit au froid. L'ensemble est ensuite transféré dans le tampon de blocage (volume à volume) et est agité pendant 16 h.

La résine est coulée dans une colonne XK16 thermostatée (Amersham) équipée de 2 pistons. Après décantation, elle est lavée 4 à 5 fois en alternant entre du tampon de blocage et du tampon de lavage.

Après ce lavage, la colonne est abondamment rincée avec du tampon Tris-HCl 10 M, pH = 7,4 ; NaCl 3M, pour éliminer les molécules d'enoxaparine® complexées avec l'AT III.

Enfin, la colonne est équilibrée avec du tampon Tris HCl 10 mM, pH = 7,4 ; NaCl 0,4 M.

2. Séparation des espèces affines de l'enoxaparine® par chromatographie d'affinité

On injecte dans la colonne une solution d'enoxaparine® à 1 mg/ml dans du tampon Tris HCl 10 mM, pH = 7,4 ; NaCl 0,4 M. La colonne est abondamment lavée avec le même tampon puis l'élution est réalisée avec du tampon Tris HCl 10 mM, pH = 7,4 ; NaCl 3 M.

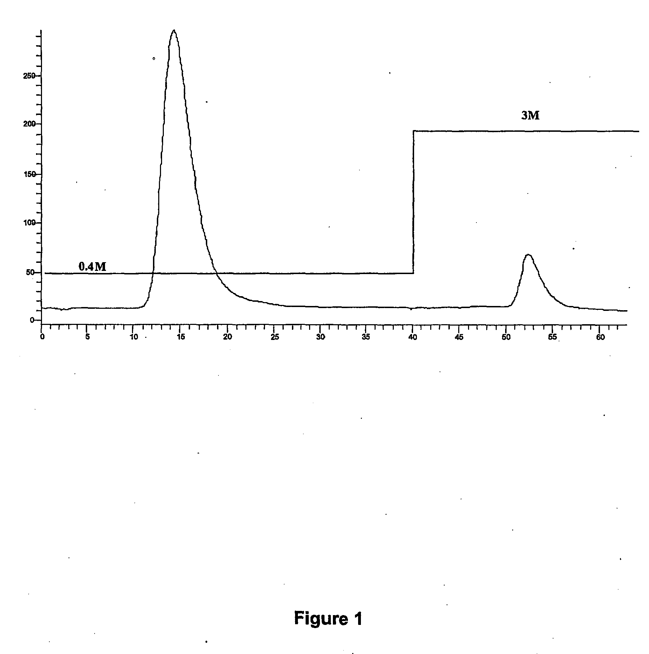

Le comportement des espèces affines est suivi avec un détecteur UV à barrette de diode ( HP 1100) en mesurant l'absorbance des fractions à 232 nm. Comme le montre la fig. 1, les espèces affines sont spécifiquement retenues sur la colonne et ne sont éluées qu'en présence de NaCl 3M.

Exemple 2: Comparaison avec une autre colonne de chromatographie d'affinité

1. Capacité

Deux colonnes sont réalisées avec un protocole de greffage identique, sauf pour l'agent protecteur :

- Colonne 1 : Protection lors du greffage par 40 mg d'enoxaparine®
- Colonne 2 : Protection lors du greffage par 120 mg d'héparine

La différence de quantité utilisée dans la protection est justifiée par la différence de masse moléculaire moyenne (un rapport d'approximativement 3,4).

Afin de déterminer la capacité des colonnes, 400 $\mu$g d'une HBPM préparée ainsi que décrit dans l'exemple 7 de la demande internationale WO 02/08295 sont injectés dans chaque colonne, dans un tampon Tris-HCl 10 mM pH = 7,4 ; NaCl 0,2 M à un débit = 0,5 ml/min. L'élution est réalisée avec du NaCl 3M.

La séparation des différentes espèces polysaccharidiques est suivie par un détecteur UV à barrette de diode ( HP 1100) en mesurant l'absorbance des fractions à 232 nm.

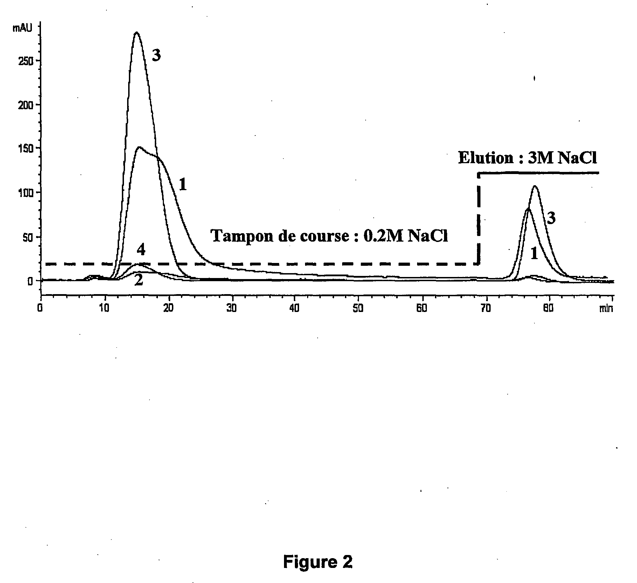

Une séparation est observée sur les deux colonnes mais le profil de séparation est différent (Fig. 2). En particulier, le pic des espèces non retenues est largement traînant sur la colonne 2 (protection : héparine). De plus, la quantité éluée avec la colonne 2 (protection : héparine) semble être plus faible que celle éluée avec la colonne 1 (protection : enoxaparine®).

Pour vérifier quantitativement ce résultat qualitatif, le pourcentage d'espèces retenues est calculé grâce à l'intégration des aires effectuée sur le logiciel HP Chemstation® selon la formule :

*% Espèces retenues = aire du pic d'élution / (aire du pic des espèces non retenues+aire du pic des espèces retenues)*

Sachant que le pourcentage d'espèces affines dans une fraction hexasaccharidique de l'HBPM utilisée est estimé à 22-24 %, on a effectué une détermination approximative de la capacité en faisant varier la quantité injectée. La capacité correspond alors à la quantité maximale de HBPM injectée pour laquelle l'on obtient ce pourcentage de 22-24 % à l'élution.

On a ainsi trouvé que la capacité de la colonne 1 (protection : enoxaparine) est de 115,8 $\mu$g et que la capacité de la colonne 2 (protection : héparine) est de 64 $\mu$g.

Sélectivité

On définit ici par sélectivité la capacité des résines à distinguer lors de la séparation les espèces polysaccharidiques affines des non affines.

Pour réaliser ces analyses, des injections de HBPM de quantité inférieure à la capacité précédemment déterminée ont été effectuées.

a. Colonne 1 (protection : enoxaparine®),

Les fractions affines et non affines après plusieurs injections de 427 $\mu$g de HBPM ont été réunies et analysées en CLHP CTA-SAX (MOURIER et al., 2004, Anal.Biochem., 332 : 299-313). La fraction affine obtenue est pure et complète, en ce qu'elle ne contient pas d'espèces non affines et qu'elle présente la totalité des hexasaccharides affins. La fraction non affine est de façon complémentaire totalement déplétée en espèce affines.

Pour corroborer l'analyse structurale, les activités anti-Xa des fractions affines et non affines séparées sur la colonne 1 (protection : enoxaparine®) ont été déterminées.

Celle de la fraction affine est égale à 818 $\pm$ 10 UI/mg ; pour comparaison, l'activité de l'hexasaccharide $\Delta$UA-(1$\rightarrow$4)$\alpha$-GlcNAc(6S)-(1$\rightarrow$4)$\beta$-GlcA-(1$\rightarrow$4)$\alpha$-GlcNS(NS,3,6S)-(1$\rightarrow$4)$\beta$-IdA2S-(1$\rightarrow$4)$\alpha$-GlcNS(NS,6S) est d'environ 650-700 UI/mg. Par contre, on a été totalement incapable de détecter une activité anti-Xa dans les fractions non affines.

Les analyses biologiques effectuées sur les fractions sont donc parfaitement en accord avec les analyses structurales.

b. Colonne 2 (protection : héparine)

Une étude similaire a été effectuée pour la colonne 2 (protection : héparine). Afin d'optimiser le fonctionnement de cette résine, les quantités injectées étaient néanmoins plus petites (60 $\mu$g), au regard de la capacité déterminée précédemment.

La fraction affine n'est pas aussi pure que celle obtenue avec la colonne 1 (protection : enoxaparine®). On observe en effet la présence d'hexasaccharides non affins, en particulier d'hexasaccharides très sulfatés comme le $\Delta$UA2S-(1$\rightarrow$4)$\alpha$-GlcNS(NS,6S)-(1$\rightarrow$4)$\beta$-IdA2S-(1$\rightarrow$4)$\alpha$-GlcNS(NS,6S)-(1$\rightarrow$4)$\beta$-IdA2S-(1$\rightarrow$4)$\alpha$-GlcNS(NS,6S) ou le $\Delta$UA2S-(1$\rightarrow$4)$\alpha$-GlcNS(NS,6S)-(1$\rightarrow$4)$\beta$-IdA2S-(1$\rightarrow$4)$\alpha$-GlcNS(NS,6S)-(1$\rightarrow$4)$\beta$-GlcA-(1$\rightarrow$4)$\alpha$-GlcNS(NS,6S), en quantité non négligeable.

De plus, on retrouve dans la fraction non affine des espèces affines, en particulier l'espèce affine majoritaire : $\Delta$UA-(1$\rightarrow$4)$\alpha$-GlcNAc(6S)-(1$\rightarrow$4)$\beta$-GlcA-(1$\rightarrow$4)$\alpha$-GlcNS(NS,3,6S)-(1$\rightarrow$4)$\beta$-IdA2S-(1$\rightarrow$4)$\alpha$-GlcNS(NS,6S).

Les titres des activités anti-Xa des fractions affines et non affines confirment les analyses structurales. En effet les fractions affines présentent une activité anti-Xa qui est seulement de 565 $\pm$ 45 UI/mg. Par ailleurs, on observe une activité résiduelle non négligeable, d'environ 15 UI/mg, dans la fraction non affine. Cette activité est le reflet des espèces affines résiduelles dans la fraction non affine mise en évidence lors de l'analyse structurale.

Il est donc clair que la sélectivité de la colonne 1 (enoxaparine ®) est supérieure à celle de la colonne 2 (héparine).

**Revendications**

1. Colonne de chromatographie d'affinité comprenant la protéine antithrombine III (ATIII) liée à un support solide **caractérisée en ce que** :

   a. la protéine ATIII est la protéine sauvage ou un variant de celle-ci,
   b. la protéine ATIII a été préalablement activée par incubation avec une héparine de bas poids moléculaire (HBPM) non modifiée et riche en espèces actives,
   c. la protéine ATIII est liée de façon covalente à une résine dans un rapport inférieur à environ 2 mg de protéine par ml de résine hydratée.

2. Colonne telle que définie à la revendication 1 **caractérisée en ce que** le rapport entre les quantités de sites liant ATIII présents dans HBPM et de molécules d'ATIII est compris entre environ 5 et environ 15.

3. Colonne telle que définie à la revendication 2 **caractérisée en ce que** ce rapport est d'environ 10.

4. Colonne telle que définie à l'une quelconque des revendications 1 à 3 **caractérisée en ce que** la HBPM est l'enoxaparine ®.

5. Colonne telle que définie à la revendication 1 **caractérisée en ce que** le rapport ATIII/résine est compris entre 0,5 et 1,5 mg de protéine par ml de résine.

6. Procédé de purification des espèces affines de l'ATIII dans un échantillon comprenant des espèces affines et non affines de l'ATIII, ledit procédé comprenant :

   a. l'introduction dudit échantillon dans la colonne de chromatographie d'affinité selon la revendication 1, ladite colonne étant préalablement équilibrée dans un tampon salin approprié ;
   b. le lavage des espèces non spécifiquement retenues de ladite colonne par un tampon salin de lavage approprié et
   c. l'élution des espèces spécifiquement retenues de ladite colonne par un tampon salin d'élution approprié.

7. Procédé de purification des espèces affines de l'ATIII selon la revendication 6 **caractérisé en ce que** lesdites espèces sont des oligosaccharides.

**Claims**

1. Affinity chromatography column comprising the protein antithrombin III (ATIII) bound to a solid support, **characterised in that**:

   a. the protein ATIII is the wild-type protein or a variant thereof,
   b. the protein ATIII has previously been activated by incubation with an unmodified, low molecular weight heparin (LMWH) rich in active species,
   c. the protein ATIII is covalently bound to a resin in a ratio of less than about 2 mg of protein per ml of hydrated resin.

2. Column as defined in claim 1, **characterised in that** the ratio between the quantity of ATIII binder sites present in LMWH and molecules of ATIII is between about 5 and about 15.

3. Column as defined in claim 2, **characterised in that** the ratio is about 10.

4. Column as defined in any one of claims 1 to 3, **characterised in that** the LMWH is enoxaparin ®.

5. Column as defined in claim 1, **characterised in that** the ratio of ATIII to resin is between 0.5 and 1.5 mg of protein per ml of resin.

6. Process for purifying species having affinity for ATIII in a sample comprising species having affinity and species not having affinity for ATIII, the said process comprising:

   a. introducing said sample into the affinity chromatography column according to claim 1, said column having previously been equilibrated in a suitable saline buffer;
   b. washing the species not specifically retained in said column with a suitable saline washing buffer, and
   c. eluting the species specifically retained in said column with a suitable saline eluting buffer.

7. Process for purifying species having affinity for ATIII according to claim 6, **characterised in that** the species are oligosaccharides.

**Patentansprüche**

1. Affinitätschromatographiekolonne, umfassend das Protein Antithrombin III (ATIII), aufgebracht auf einem festen Träger, **dadurch gekennzeichnet, dass**

a. das Protein ATIII ein Wildprotein oder eine Variante davon ist,

b. das Protein ATIII vorab aktiviert wird durch Inkubation mit einem Heparin mit einem geringen Molekulargewicht (HBPM), welches nicht modifiziert und reich an aktiven Stellen ist,

c. das Protein ATIII kovalent gebunden ist an ein Harz in einem Verhältnis von geringer als ungefähr 2 mg Protein pro ml des hydratisierten Harzes.

2. Kolonne nach Anspruch 1, **dadurch gekennzeichnet, dass** das Verhältnis zwischen den Mengen an gebundenen Stellen des ATIII, welches in HBPM zugegen ist zu den Molekülen von ATIII zwischen ungefähr 5 und ungefähr 15 liegt.

3. Kolonne nach Anspruch 2, **dadurch gekennzeichnet, dass** das Verhältnis ungefähr 10 ist.

4. Kolonne nach einen der Ansprüche 1 bis 3, **dadurch gekennzeichnet, dass** HBPM gleich Enoxaparin® ist.

5. Kolonne nach Anspruch 1, **dadurch gekennzeichnet, dass** das Verhältnis ATII/Harz zwischen 0,5 und 1,5 mg Protein pro ml Harz liegt.

6. Verfahren zur Reinigung von affinen Stellen des ATIII in einer Probe, umfassend affine Stellen und nicht-affine Stellen von ATIII, wobei das Verfahren umfasst:

a. Einführen der Probe in eine Affinitätschromatographiekolonne nach Anspruch 1, wobei die Kolonne vorab mit einem geeigneten salzhaltigen Puffer äquilibriert wurde;

b. Herauswaschen der nicht spezifisch zurückgehaltenen Teile aus der Kolonne mit einem geeigneten salzhaltigen Waschpulver und

c. Eluieren der spezifisch zurückgehaltenen Teile aus der Kolonne mit einem geeigneten salzhaltigen Eluierungspuffer.

7. Verfahren zur Reinigung von affinen Stellen des ATIII gemäß Anspruch 6, **dadurch gekennzeichnet, dass** die Stellen Oligosaccharide sind.

**Figure 1**

**Figure 2**

## RÉFÉRENCES CITÉES DANS LA DESCRIPTION

**Documents brevets cités dans la description**

- WO 0208295 A

**Littérature non-brevet citée dans la description**

- **Chandra et al.** *Proc. Natl. Acad. Sci. U.S.A.,* 1993, vol. 80, 1845-1848
- **Höök et al.** *FEBS Lett.,* 1976, vol. 66, 90-93
- **Hopwood et al.** *FEBS Lett.,* 1976, vol. 69, 51-54
- **Denton et al.** *Anal. Biol.,* 1981, vol. 118, 388-391
- **Pixley ; Danishefsky.** *Thromb. Res.,* 1982, vol. 26, 129-133
- **MOURIER et al.** *Anal.Biochem.,* 2004, vol. 332, 299-313